# EUROPÄISCHE PATENTANMELDUNG

(11) **EP 3 018 545 A1**
(43) Veröffentlichungstag der Anmeldung: **11.05.2016**
(21) Anmeldenummer: 15003091.4
(22) Anmeldetag: 29.10.2015
(51) Int. Cl.: G05B 19/414

(54) **STELLANTRIEB UND VERFAHREN ZUR WARTUNG UND/ODER INBETRIEBNAHME EINES STELLANTRIEBS**

(30) Priorität: 29.10.2014 DE 102014016056
(71) Anmelder: SIPOS Aktorik GmbH, 90518 Altdorf (DE)
(72) Erfinder: RAITHEL, Ulrich, 91080 Uttenreuth (DE)
(74) Vertreter: Maucher Börjes Jenkins Patent- und Rechtsanwälte

(57) **Zusammenfassung**

Bei einem Stellantrieb (1) wird vorgeschlagen, eine elektronische Steuerung (2) und eine Datenbus-Schnittstelle (5) derart einzurichten, dass die elektronische Steuerung (2) alternativ zu einer Versorgung über einen Netzanschluss (4) über eine Datenbus-Schnittstelle (5) versorgbar ist, wenn der Netzanschluss (4) spannungsfrei ist (Fig. 2).

## Beschreibung

Die Erfindung betrifft einen Stellantrieb, insbesondere einen elektrischen Stellantrieb, wobei eine elektronische Steuerung ausgebildet ist, in welcher Parameter und/oder Zustandsvariablen des Stellantriebs verarbeitbar und/oder veränderbar sind, wobei die elektronische Steuerung über einen Netzanschluss des Stellantriebs im Betrieb versorgbar ist, wobei eine Datenbus-Schnittstelle ausgebildet und an die elektronische Steuerung angeschlossen ist.

Stellantriebe sind bekannt und werden beispielsweise eingesetzt, um Ventile in Prozessanlagen automatisiert und/oder ferngesteuert zu betätigen. Hierzu weisen die Stellantriebe jeweils eine elektronische Steuerung auf, mit welcher ein Betätiger, beispielsweise ein Elektromotor, ansteuerbar ist. Die elektronische Steuerung greift auf Parameter zu, mit welchen sie an ein jeweils angeschlossenes Ventil anpassbar ist.

Die Erfindung betrifft weiter ein Verfahren zur Wartung und/oder Inbetriebnahme eines Stellantriebs, wobei eine elektronische Steuerung des Stellantriebs in einem Normalbetrieb über einen Netzanschluss des Stellantriebs versorgt wird, wobei in der elektronischen Steuerung Parameter und/oder Zustandsvariablen des Stellantriebs verarbeitet und/oder verändert werden, und wobei über eine Datenbus-Schnittstelle wenigstens ein Wartungsschritt ausgelöst wird. Es ist bekannt, dass Stellantriebe zur Inbetriebnahme mit einem Wartungsschritt an das jeweils angeschlossene Ventil angepasst werden müssen. Auch im Betrieb kann eine Anpassung des Stellantriebs mittels Wartungsschritten erforderlich sein.

Stellantriebe werden häufig aus einem Starkstromnetz versorgt. Um Gefährdungen von Bedienpersonen zu vermeiden, wird dieses Starkstromnetz, häufig ein 400V-Netz, abgeschaltet, wenn die Bedienperson in der Prozessanlage tätig ist.

Der Erfindung liegt die Aufgabe zugrunde, die Inbetriebnahme und/oder Wartung eines Stellantriebs in einer Prozessanlage zu vereinfachen.

Zur Lösung dieser Aufgabe sind erfindungsgemäß die Merkmale von Anspruch 1 vorgesehen. Insbesondere wird somit bei einem Stellantrieb der eingangs beschriebenen Art erfindungsgemäß zur Lösung der Aufgabe vorgeschlagen, dass die elektrische Steuerung zusätzlich über die Datenbus-Schnittstelle mit elektrischer Energie versorgbar ist. Von Vorteil ist dabei, dass eine Inbetriebnahme vor Ort in der Prozessanlage bei abgeschalteter Hauptversorgung durchführbar ist, indem die zur Inbetriebnahme erforderliche elektrische Energie über die Datenbus-Schnittstelle bereitstellbar ist. Die Erfindung macht sich somit zunutze, dass die erforderliche Leistungsaufnahme bei Inbetriebnahme deutlich geringer als die Leistungsaufnahme im Normalbetrieb, also beispielsweise bei einem Betätigen eines angeschlossenen Ventils, ist. Die Erfindung ist auch in dem Fall mit Vorteil einsetzbar, dass eine Veränderung der Parameter und/oder eine Auslesen einer Zustandsvariablen und/oder eine Änderung einer Software in der elektronischen Steuerung oder ein sonstiger Wartungsschritt nach der Inbetriebnahme zu einem späteren Zeitpunkt erforderlich oder wünschenswert ist. Parameter können beispielsweise Endlagen des Ventils, Verstellwege, Verstellgeschwindigkeiten, Drehmomente an den Endlage oder sonstige Größen, mit denen ein Schaltzustand und/oder ein Schaltverhalten des angeschlossenen Ventils beschreibbar ist/sind, sein. Zustandsvariablen können beispielsweise physikalische Messgrößen, welche einen momentanen Zustand des Ventils und/oder des Stellantriebs beschreiben, sein.

Die elektronische Steuerung kann somit wahlweise über den Netzanschluss oder über die Datenbus-Schnittstelle versorgt sein.

Bei einer Ausgestaltung der Erfindung kann vorgesehen sein, dass die Parameter und/oder Zustandsvariablen des Stellantriebs über die Datenbus-Schnittstelle übermittelbar sind. Die Erfindung nutzt somit eine zur Inbetriebnahme oder Wartung ohnehin erforderliche Verbindung. Weitere Anschlusskabel sind verzichtbar.

Bei einer Ausgestaltung der Erfindung kann vorgesehen sein, dass die elektronische Steuerung zu einer Ansteuerung eines Betätigers des Stellantriebs eingerichtet ist. Somit ist die Betätigung des Ventils mit der Erfindung konfigurierbar.

Bei einer Ausgestaltung der Erfindung kann vorgesehen sein, dass die Datenbus-Schnittstelle als USB-Schnittstelle oder als Ethernet-Schnittstelle ausgebildet ist. Von Vorteil ist dabei, dass die USB-Schnittstelle einen Pin und die Ethernet-Schnittstelle Adern bereitstellen, welcher oder welche zur Versorgung der elektronischen Steuerung nutzbar ist/sind.

Bei einer Ausgestaltung der Erfindung kann vorgesehen sein, dass die elektronische Steuerung abnehmbar an dem Stellantrieb angeordnet ist. Von Vorteil ist dabei, dass die elektronische Steuerung an einen Ort bringbar ist, an welcher Mittel zur Inbetriebnahme, beispielsweise ein Computer und/oder ein weiterer Stellantrieb, vorhanden sind. Lange Verbindungsleitungen sind so verzichtbar. Ein zusätzlicher Versorgungsanschluss für die elektronische Steuerung ist ebenfalls verzichtbar. Die elektronische Steuerung kann somit beispielsweise zu einem bereits konfigurierten und/oder in Betrieb genommenen Stellantrieb gebracht werden, um dessen Einstellungen zu übernehmen. Besonders günstig ist es, wenn die elektronische Steuerung in einem Steuerkopf angeordnet ist. Somit kann die elektronische Steuerung gegen mechanische Beanspruchungen geschützt von dem Stellantrieb abnehmbar ausgebildet sein.

Bei einer Ausgestaltung der Erfindung kann vorgesehen sein, dass eine Umschalteinrichtung zu einem Umschalten einer Versorgung der elektronischen Steuerung über den Netzanschluss auf eine Versorgung der elektronischen Steuerung über die Datenbus-Schnittstelle eingerichtet ist. Somit ist die elektronische Steuerung wahlweise über den Netzanschluss oder über die Datenbus-Schnittstelle versorgbar. Bevorzugt ist die Umschalteinrichtung zum automatischen Umschalten ausgebildet. Beispielsweise kann vorgesehen sein, dass die Umschalteinrichtung zur automatischen Detektion eines Ausfalls oder einer Abschaltung des Netzanschlusses ausgebildet und eingerichtet ist. Somit ist erreichbar, dass die elektronische Steuerung für Wartungsschritte unabhängig von einer Netzstabilität bereitstellbar ist. Beispielsweise kann die Umschalteinrichtung eine an sich bekannte Diodenschaltung aufweisen, welche die jeweils höhere Spannung von am Netzanschluss anliegender Spannung und an der Datenbus-Schnittstelle anliegender Spannung durchlässt.

Zur Lösung der genannten Aufgabe werden erfindungsgemäß bei einem Verfahren zur Wartung eines Stellantriebs die Merkmale des unabhängigen, auf ein Verfahren gerichteten Anspruchs vorgeschlagen. Insbesondere wird somit erfindungsgemäß bei einem Verfahren der eingangs beschriebenen Art zur Lösung der Aufgabe vorgeschlagen, dass die elektronische Steuerung zumindest während einer Ausführung des wenigstens einen Wartungsschritts über die Datenbus-Schnittstelle mit elektrischer Energie versorgt wird. Die Erfindung erlaubt es somit, den Wartungsschritt auch bei abgeschalteter Hauptversorgung auszuführen. Bei bestehender Hauptversorgung kann die elektronische Steuerung wie bisher über den Netzanschluss erfolgen. Die Erfindung hat erkannt, dass zur Ausführung des Wartungsschritts immer ein weiteres elektrisches Gerät nötig ist. Die Erfindung nutzt eine Energieversorgung dieses weiteren Geräts, um die für den Wartungsschritt notwendige elektrische Energie für die elektronische Steuerung bereitzustellen. Ein separater Versorgungsanschluss für die elektronische Steuerung ist somit verzichtbar.

Der Wartungsschritt kann beispielsweise ein Auslesen und/oder ein Beschreiben eines Parameterwertes oder einer Zustandsvariable über die Datenbus-Schnittstelle umfassen. Zusätzlich oder alternativ kann der Wartungsschritt ein Installieren einer Software über die Datenbus-Schnittstelle umfassen, beispielsweise zu Veränderung oder Erweiterung einer Funktionalität des Stellantriebs. Zusätzlich oder alternativ kann der Wartungsschritt ein Ausführen eines Betätigungsvorgangs eines Betätigers des Stellantriebs über die Datenbus-Schnittstelle umfassen. Dies ist besonders dann vorteilhaft, wenn der Betätiger nicht elektrisch, sondern beispielsweise mechanisch und/oder hydraulisch und/oder pneumatisch angetrieben ist.

Bei einer Ausgestaltung der Erfindung kann vorgesehen sein, dass die elektronische Steuerung während des Wartungsschritts vom Netzanschluss getrennt ist. Somit ist sicher vermeidbar, dass ein Bedienperson bei der Inbetriebnahme und/oder sonstigen Wartung mit Spannungspotentialen, die bei Normalbetrieb auftreten oder vorhanden sind, in Berührung kommt.

Bei einer Ausgestaltung der Erfindung kann vorgesehen sein, dass die elektronische Steuerung aus einem an die Datenbus-Schnittstelle angeschlossenen Kommunikationsteilnehmer versorgt wird. Somit ist eine Energieversorgung des Kommunikationsteilnehmers, die zum Datenaustausch über die Datenbus-Schnittstelle ohnehin erforderlich ist, zur Versorgung der elektronischen Steuerung, zumindest während des Datenaustausches oder solange der Kommunikationsteilnehmer an die Datenbus-Schnittstelle angeschlossen ist, nutzbar.

Bei einer Ausgestaltung der Erfindung kann vorgesehen sein, dass der Kommunikationsteilnehmer aus einem Energiespeicher, insbesondere einem Akku, gespeist wird. Von Vorteil ist dabei, dass Netzanschlüsse während des Wartungsschritts gänzlich verzichtbar sind.

Bei einer Ausgestaltung der Erfindung kann vorgesehen sein, dass die elektronische Steuerung über eine Datenbus-Schnittstelle eines weiteren Stellantriebs versorgt wird. Somit ist ein Kopieren von Einstellungen von einem weiteren Stellantrieb in den Stellantrieb einfach ausführbar. Bevorzugt wird die elektronische Steuerung aus der elektronischen Steuerung des weiteren Stellantriebs versorgt. Die erfindungsgemäße Versorgung über die Datenbus-Schnittstelle bietet hier den Vorteil, dass der weitere Stellantrieb nicht geöffnet werden muss, um eine Versorgung mit elektrischer Energie bereitzustellen. Vielmehr ist eine an einer Gehäuseaußenseite ausgebildete Datenbus-Schnittstelle als Versorgungsanschluss nutzbar. Der weitere Stellantrieb ist somit ein Kommunikationsteilnehmer des Stellantriebs. Ein direktes Kopieren von Parametern ist somit leicht durchführbar.

Bei einer Ausgestaltung der Erfindung kann vorgesehen sein, dass die elektronische Steuerung über eine Datenbus-Schnittstelle eines tragbaren Computers versorgt wird. Von Vorteil ist dabei, dass auch der weitere Kommunikationsteilnehmer keine externe Stromversorgung benötigt. Der Wartungsschritt kann somit bei vollständig abgeschalteter Prozessanlage, beispielsweise bei Inbetriebnahme, in einem Havariefall oder bei einem Netzausfall, durchgeführt werden. Der tragbare Computer ist somit ein Kommunikationsteilnehmer des Stellantriebs.

Bei einer Ausgestaltung der Erfindung kann vorgesehen sein, dass die elektronische Steuerung vor dem wenigstens einen Wartungsschritt aus dem Stellantrieb abgenommen wird. Von Vorteil ist dabei, dass der Wartungsschritt an einem geeigneten Ort durchführbar ist, ohne dass lange Verbindungsleitungen erforderlich sind. Dies ist besonders dann günstig, wenn der bereits erwähnte weitere Kommunikationsteilnehmer, beispielsweise ein weiterer Stellantrieb, ortsfest und entfernt angeordnet ist.

Bei einer Ausgestaltung der Erfindung kann vorgesehen sein, dass der Netzanschluss auf ein Abschalten und/oder einen Ausfall einer Netzspannung überwacht wird und bei einem Abschalten und/oder Ausfall die Versorgung der elektronischen Steuerung über die Datenbus-Schnittstelle aktiviert wird. Von Vorteil ist dabei, dass ein automatisches Umschalten von einer Versorgung der elektronischen Steuerung über den Netzanschluss auf eine Versorgung der elektronischen Steuerung über die Datenbus-Schnittstelle ausführbar ist. Somit ist erreichbar, dass eine Versorgung über die Datenbus-Schnittstelle nur dann stattfindet, wenn eine Versorgung über den Netzanschluss nicht möglich ist.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombinationen der Merkmale einzelner oder mehrerer Ansprüche untereinander und/oder mit einzelnen oder mehreren Merkmalen der Ausführungsbeispiele.

Es zeigt in stark schematisierter Darstellung
- Fig. 1: eine Wartung oder Inbetriebnahme eines Stellantriebs nach dem Stand der Technik,
- Fig. 2: eine erfindungsgemäße Wartung oder Inbetriebnahme eines Stellantriebs mit einem Computer und
- Fig. 3: eine erfindungsgemäße Wartung oder Inbetriebnahme eines Stellantriebs mit einem weiteren Stellantrieb.

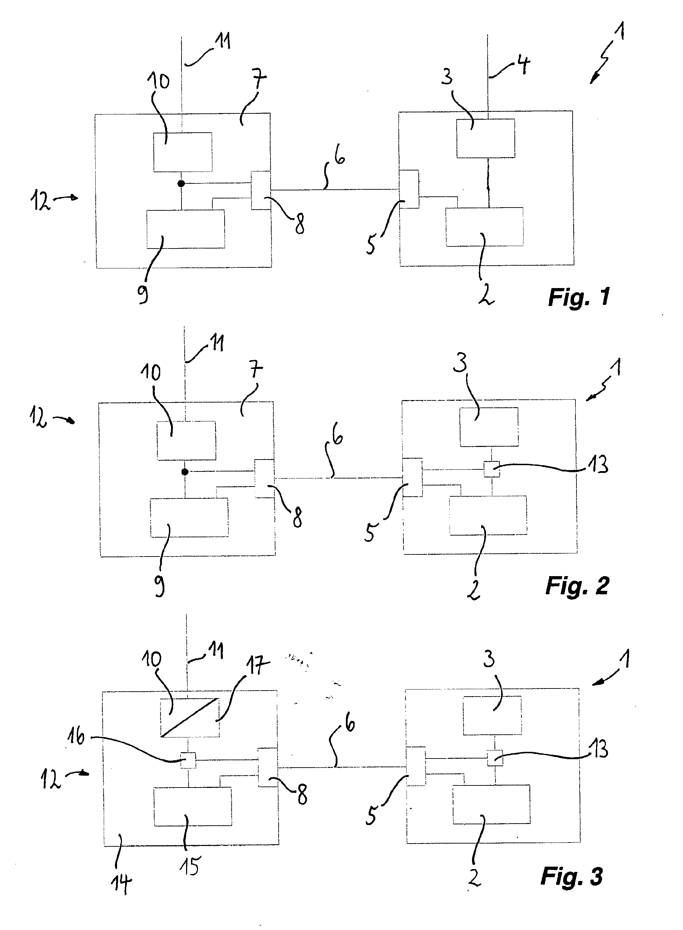

Fig. 1 zeigt eine Wartung oder Inbetriebnahme eines im Ganzen mit 1 bezeichneten Stellantriebs. Der Stellantrieb 1 weist eine elektronische Steuerung 2 auf, die an sich bekannter Weise zur Ansteuerung eines nicht weiter dargestellten Betätigers, an den ein Ventil angeschlossen ist, ausgebildet und eingerichtet ist.

Zur Versorgung der elektronischen Steuerung 2 und des Betätigers weist der Stellantrieb 1 ein Netzteil 3 auf, welches aus einem Netzanschluss 4 gespeist ist.

Die elektronische Steuerung 2 ist durch Parameter parametrierbar, um den Stellantrieb 1 bei einer Inbetriebnahme oder einer Wartung auf den jeweils vorhandenen Betätiger, beispielsweise einen Elektromotor, und/oder auf das jeweils angeschlossene Ventil oder die jeweils angeschlossene Stelleinrichtung abzustimmen.

Hierzu ist an dem Stellantrieb 1 eine Datenbus-Schnittstelle 5 ausgebildet, über welche die Parameter auslesbar und/oder einstellbar sind.

Zur Inbetriebnahme und/oder Wartung wird die Datenbus-Schnittstelle 5 über ein Verbindungskabel 6 mit einem tragbaren Computer 7 verbunden, der eine korrespondierende Datenbus-Schnittstelle 8 aufweist.

Im beschriebenen Fall ist die Datenbus-Schnittstelle 5 als USB-Schnittstelle ausgebildet.

Der tragbare Computer 7 hat eine Kommunikationselektronik 9, welche über ein Netzteil 10 aus einem Netzanschluss 11 versorgt ist.

Die Kommunikationselektronik 9 organisiert einen Datenaustausch über das Verbindungskabel 6 zur Parametrierung der elektronischen Steuerung 2.

Fig. 2 zeigt eine erfindungsgemäße Wartung oder Inbetriebnahme oder Wartung eines Stellantriebs 1.

Der Stellantrieb 1 hat wie zuvor beschrieben eine elektronische Steuerung 2, ein Netzteil 3 und eine Datenbus-Schnittstelle 5, hier beispielhaft als USB-Schnittstelle gezeigt. Bei weiteren Ausführungsbeispielen ist die Datenbus-Schnittstelle 5 als Ethernet-Schnittstelle ausgebildet.

Im Unterschied zu dem Stellantrieb 1 gemäß Fig. 1 ist die elektronische Steuerung 2 des Stellantriebs 1 gemäß Fig. 2 zusätzlich zum Netzteil 3 über die Datenbus-Schnittstelle 5 versorgbar. Daher zeigt Fig. 2 auch, dass das Netzteil 3 von dem Netzanschluss getrennt ist.

Der Stellantrieb 1 ist über ein Verbindungskabel 6 mit einem Kommunikationsteilnehmer 12 verbunden. Der Kommunikationsteilnehmer 12 ist hier beispielhaft als tragbarer Computer 7 gezeigt.

Das Verbindungskabel 6 stellt hierbei eine elektrische Verbindung zwischen der Datenbus-Schnittstelle 5 des Stellantriebs 1 und einer korrespondierenden Datenbus-Schnittstelle 8 her. Über diese elektrische Verbindung tauschen der Stellantrieb 1 und der Kommunikationsteilnehmer 12 aus. Die Datenbus-Schnittstellen 5, 8, die beispielsweise als USB-Schnittstellen ausgebildet sind, weisen die Möglichkeit auf, zusätzlich zu den Daten noch elektrische Energie zur Versorgung bereitzustellen und zu übertragen. Im Falle einer Ausbildung als USB-Schnittstelle ist dies beispielsweise durch Spannungs-Pins gegeben.

Der Stellantrieb 1 ist mit einer Umschalteinrichtung 13 ausgerüstet, mit welcher zwischen einer Versorgung der elektronischen Steuerung 2 aus einem an das Netzteil 3 angeschlossenen Netzanschluss 4 (vgl. Fig. 1) und einer Versorgung der elektronischen Steuerung 2 über die Datenbus-Schnittstelle 5 umgeschaltet werden kann. Hierzu überwacht die Umschalteinrichtung 13, ob an dem Netzteil 3 eine Netzspannung anliegt, und schaltet auf eine Versorgung über die Datenbus-Schnittstelle 5 um, wenn dies nicht der Fall ist.

Bei der Wartung oder Inbetriebnahme kann der Stellantrieb 1 somit vom Netzanschluss 4 getrennt werden, da die elektronische Steuerung 2 über die Datenbus-Schnittstelle 2 versorgbar ist.

Die Wartungsschritte, beispielsweise ein Auslesen oder Beschreiben von Parametern und/oder Zustandsvariablen und/oder ein Hinterlegen von Softwareoptionen und/oder Firmwareupdates, sind somit über die Datenbus-Schnittstelle 5 bei spannungslosem Netzanschluss 4 in der elektronischen Steuerung 2 ausführbar.

Der Kommunikationsteilnehmer 12 ist hierbei über sein Netzteil 10 aus einem Netzanschluss 11 versorgt. Alternativ verfügt der Kommunikationsteilnehmer 12 in an sich bekannter Weise über einen Energiespeicher 17, beispielsweise einen Akku, aus dem die elektronische Steuerung 2 des Stellantriebs 1 über das Verbindungskabel 6 versorgbar ist. Ein Netzanschluss ist in diesem Fall vollständig verzichtbar.

Fig. 3 zeigt ein weiteres erfindungsgemäßes Ausführungsbeispiel. Funktionell und/oder konstruktiv zu dem Ausführungsbeispiel gemäß Fig. 2 gleichartige oder identische Bauteile und Funktionseinheiten sind mit denselben Bezugszeichen bezeichnet und nicht noch einmal gesondert beschrieben. Die Ausführungen zu Fig. 2 gelten somit zu Fig. 3 entsprechend.

Das Ausführungsbeispiel gemäß Fig. 3 unterscheidet sich von dem Ausführungsbeispiel gemäß Fig. 2 dadurch, dass der Kommunikationsteilnehmer 12 ein weiterer Stellantrieb 14 ist. Der weitere Stellantrieb 14 weist eine elektronische Steuerung 15 und eine Umschalteinrichtung 16 auf, die wie die elektronische Steuerung 2 und die Umschalteinrichtung 13 zu Stellantrieb 1 ausgebildet sind.

Der Stellantrieb 1 ist - wie bereits zu Fig. 2 beschrieben - an seinem Netzteil 3 spannungsfrei. Die elektronische Steuerung 2 wird daher über die Datenbus-Schnittstelle 5 mit der zum Betrieb nötigen elektrischen Energie versorgt.

Diese Energie wird an der Datenbus-Schnittstelle 8 des weiteren Stellantriebs 14 bereitgestellt, die von der elektronischen Steuerung 15 angesteuert wird.

Die Stellantriebe 1, 14 sind daher jeweils nicht nur - wie vorliegend der Stellantrieb 1 - als USB-Device betreibbar, sondern zusätzlich - wie vorliegend der Stellantrieb 14 - als USB-Host, um die Versorgungenergie bereitzustellen.

Der weitere Stellantrieb 14 ist hierbei über sein Netzteil 10 aus einem Netzanschluss 11 versorgt.

Um lange Verbindungskabel 6 zu vermeiden, kann die elektronische Steuerung 2 von dem Stellantrieb 1 abgenommen und zu dem weiteren Stellantrieb 14 gebracht werden. Hierzu kann die elektronische Steuerung 2 in einem nicht weiter dargestellten Steuerkopf angeordnet sein.

Nach dem Wartungsschritt oder der Inbetriebnahme kann die parametrierte, ausgelesene und/oder aktualisierte elektronische Steuerung 2 in den Stellantrieb 1 wieder eingesetzt werden. Es kann nun der Normalbetrieb des Stellantriebs 1 erfolgen.

Bei einem Stellantrieb 1 wird vorgeschlagen, eine elektronische Steuerung 2 und eine Datenbus-Schnittstelle 5 derart einzurichten, dass die elektronische Steuerung 2 alternativ zu einer Versorgung über einen Netzanschluss 4 über eine Datenbus-Schnittstelle 5 versorgbar ist, wenn der Netzanschluss 4 spannungsfrei ist.

### Bezugszeichenliste

- 1: Stellantrieb
- 2: elektronische Steuerung
- 3: Netzteil
- 4: Netzanschluss
- 5: Datenbus-Schnittstelle
- 6: Verbindungskabel
- 7: tragbarer Computer
- 8: korrespondierende Datenbus-Schnittstelle
- 9: Kommunikationselektronik
- 10: Netzteil
- 11: Netzanschluss
- 12: Kommunikationsteilnehmer
- 13: Umschalteinrichtung
- 14: weiterer Stellantrieb
- 15: elektronische Steuerung
- 16: Umschalteinrichtung
- 17: Energiespeicher

## Patentansprüche

1. Stellantrieb (1), insbesondere elektrischer Stellantrieb, wobei eine elektronische Steuerung (2) ausgebildet ist, in welcher Parameter und/oder Zustandsvariablen des Stellantriebs (1) verarbeitbar und/oder veränderbar sind, wobei die elektronische Steuerung (2) über einen Netzanschluss (4) des Stellantriebs (1) im Betrieb versorgbar ist, wobei eine Datenbus-Schnittstelle (5) ausgebildet und an die elektronische Steuerung (2) angeschlossen ist, **dadurch gekennzeichnet, dass** die elektrische Steuerung (2) zusätzlich über die Datenbus-Schnittstelle (5) mit elektrischer Energie versorgbar ist.

2. Stellantrieb (1) nach Anspruch 1, **dadurch gekennzeichnet, dass** die Parameter und/oder Zustandsvariablen des Stellantriebs (1) über die Datenbus-Schnittstelle (5) übermittelbar sind und/oder dass die elektronische Steuerung (2) zu einer Ansteuerung eines Betätigers des Stellantriebs (1) eingerichtet ist.

3. Stellantrieb (1) nach Anspruch 1 oder 2, **dadurch gekennzeichnet, dass** die Datenbus-Schnittstelle (5) als USB-Schnittstelle oder als Ethernet-Schnittstelle ausgebildet ist und/oder dass die elektronische Steuerung (2), vorzugsweise in einem Steuerkopf, abnehmbar an dem Stellantrieb (1) angeordnet ist.

4. Stellantrieb (1) nach einem der Ansprüche 1 bis 3, **dadurch gekennzeichnet, dass** eine Umschalteinrichtung (13) zu einem vorzugsweise automatischen Umschalten, insbesondere bei Ausfall oder Abschaltung des Netzanschlusses, einer Versorgung der elektronischen Steuerung (2) über den Netzanschluss (4) auf eine Versorgung der elektronischen Steuerung (2) über die Datenbus-Schnittstelle (5) eingerichtet ist.

5. Verfahren zur Wartung und/oder Inbetriebnahme eines Stellantriebs (1), wobei eine elektronische Steuerung (2) des Stellantriebs (1) in einem Normalbetrieb über einen Netzanschluss (4) des Stellantriebs (1) versorgt wird, wobei in der elektronischen Steuerung (2) Parameter und/oder Zustandsvariablen des Stellantriebs (1) verarbeitet und/oder verändert werden, und wobei über eine Datenbus-Schnittstelle (5) wenigstens ein Wartungsschritt ausgelöst wird, **dadurch gekennzeichnet, dass** die elektronische Steuerung (2) zumindest während einer Ausführung des wenigstens einen Wartungsschritts über die Datenbus-Schnittstelle (5) mit elektrischer Energie versorgt wird.

6. Verfahren nach Anspruch 5, **dadurch gekennzeichnet, dass** der Wartungsschritt ein Auslesen und/oder ein Beschreiben eines Parameterwertes oder einer Zustandsvariable, ein Installieren einer Software und/oder ein Ausführen eines Betätigungsvorgangs eines Betätigers des Stellantriebs (1) jeweils über die Datenbus-Schnittstelle (5) umfasst.

7. Verfahren nach Anspruch 5 oder 6, **dadurch gekennzeichnet, dass** die elektronische Steuerung (2) während des Wartungsschritts vom Netzanschluss (4) getrennt ist.

8. Verfahren nach einem der Ansprüche 5 bis 7, **dadurch gekennzeichnet, dass** die elektronische Steuerung (2) aus einem an die Datenbus-Schnittstelle (5) angeschlossenen Kommunikationsteilnehmer (12) versorgt wird, insbesondere wobei der Kommunikationsteilnehmer (12) aus einem Energiespeicher (17), insbesondere einem Akku, gespeist wird.

9. Verfahren nach einem der Ansprüche 5 bis 8, **dadurch gekennzeichnet, dass** die elektronische Steuerung (2) über eine Datenbus-Schnittstelle (8) eines weiteren Stellantriebs (14), vorzugsweise aus dessen elektronischer Steuerung (15), und/oder eine Datenbus-Schnittstelle (8) eines tragbaren Computers (7) versorgt wird und/oder dass die elektronische Steuerung (2) vor dem wenigstens einen Wartungsschritt von dem Stellantrieb (1) abgenommen wird.

10. Verfahren nach einem der Ansprüche 5 bis 9, **dadurch gekennzeichnet, dass** der Netzanschluss (4) auf ein Abschalten und/oder einen Ausfall einer Netzspannung überwacht wird und bei einem Abschalten und/oder Ausfall die Versorgung der elektronischen Steuerung (2) über die Datenbus-Schnittstelle (5) aktiviert wird.
